(19) Europäisches Patentamt
European Patent Office
Office européen des brevets

(11) **EP 2 322 776 B1**

(12) **EUROPEAN PATENT SPECIFICATION**

(45) Date of publication and mention
of the grant of the patent:
**28.12.2011 Bulletin 2011/52**

(51) Int Cl.:
***F01N 9/00*** (2006.01)

(21) Application number: **10189617.3**

(22) Date of filing: **02.11.2010**

(54) **Exhaust gas purification system for internal combustion engine**

Abgasreinigungssystem für einen Verbrennungsmotor

Système de purification de gaz d'échappement pour moteur à combustion interne

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.11.2009 JP 2009262205**

(43) Date of publication of application:
**18.05.2011 Bulletin 2011/20**

(73) Proprietor: **Honda Motor Co., Ltd.
Tokyo 107-8556 (JP)**

(72) Inventors:
• **Takeuchi, Hiroto
Saitama 351-0193 (JP)**

• **Maki, Hidetaka
Saitama 351-0193 (JP)**

(74) Representative: **Trossin, Hans-Jürgen
Weickmann & Weickmann
Postfach 860 820
81635 München (DE)**

(56) References cited:
**JP-A- 2003 254 042      JP-A- 2005 002 830
JP-A- 2009 167 839      US-A1- 2003 200 746
US-A1- 2006 225 409**

EP 2 322 776 B1

**Description**

BACKGROUND OF THE INVENTION

Field of the Invention

The present invention relates to an exhaust gas purification system or an internal combustion engine according to the preamble part of claim 1. The present invention relates more particularly to an exhaust gas purification system for an internal combustion engine, for eliminating soot and SOF deposited on a filter that collects particulates from exhaust gases.

Description of the Related Art

An exhaust gas purification system of the generic kind is known from JP-A-20033254042.

From JP-A-2005-002830 it is further known a method for removing particulate matter deposited on a filter which is capable of catching particulate matter in an exhaust gas. In this known method, a control of removing soluble organic fraction (SOF) is performed, when it is inferred that an amount of particulate matter desposited in the filter newly exceeds the predetermine deposit amount after performing SOF removing control for raising the filter temperature below the soot combustion temperature and above SOF combustion temperature previously, and total deposit amount of the particulate matter on the filter is inferred immediately after that. When the inferred total deposit amount is above the limit deposit amount, the filter temperature is raised above the soot combustion temperature.

In the following, reference is made to further prior art.

Conventionally, there also has been proposed an exhaust gas purification system for an engine in Japanese Patent No. 4291627. This engine is a diesel engine, and has a filter provided in an exhaust pipe thereof, for collecting particulates (hereinafter simply referred to as "PM") from exhaust gases. This exhaust gas purification system executes SOF elimination control for eliminating SOF (Soluble Organic Fraction) contained in PM collected and deposited on the filter by controlling the temperature of the filter to be equal to or higher than an ignition point of SOF whenever a predetermined operating time period elapses. Further, after executing the SOF elimination control, a deposition amount of the PM deposited on the filter is calculated according to detected upstream-downstream differential pressure across the filter and a volume flow rate of exhaust gases. Then, when the calculated PM deposition amount is equal to or lager than a predetermined upper limit value, and at the same time,

predetermined soot elimination control execution conditions are satisfied, the soot elimination control for eliminating soot contained in the PM collected on the filer is executed by controlling the temperature of the filter to equal to or higher than an ignition point of soot.

Further, there has been proposed another conventional exhaust gas purification system which is disclosed in Japanese Laid-Open Patent Publication (Kokai) No. 2006-291788. An internal combustion engine to which this exhaust gas purification system is applied is also a diesel engine similarly to Japanese Patent No. 4291627, and has a filter provided in an exhaust pipe thereof, for collecting PM from exhaust gases. In this exhaust gas purification system, respective deposition amounts of SOF and soot contained in PM deposited on the filter are calculated, and when the calculated SOF deposition amount is equal to or larger than a predetermined upper limit value, the SOF elimination control is executed. Similarly, when the calculated soot deposition amount is equal to or larger than a predetermined upper limit value, the soot elimination control is executed.

However, in the exhaust gas purification system disclosed in Japanese Patent No. 4291627, since the soot elimination control is executed when the PM deposition amount is equal to or larger than the predetermined upper limit value after executing the SOF elimination control, the soot elimination control is sometimes executed immediately after execution of the SOF elimination control. Further, in the exhaust gas purification system disclosed in Japanese Laid-Open Patent Publication (Kokai) No. 2006-291788, since the soot elimination control and the SOF elimination control are executed in respective timings independently of each other, similarly to the exhaust gas purification system disclosed in Japanese Patent No. 4291627, the soot elimination control is sometimes executed immediately after the SOF elimination control. The ignition point of soot is higher than that of SOF, and hence when the temperature of the filter becomes equal to or higher than the ignition point of soot, both of soot and SOF are burned. Therefore, in both of the above-described conventional exhaust gas purification systems, when the soot elimination control is executed immediately after the SOF elimination control, the fuel used for the SOF elimination control is wasted, which degrades fuel economy of the engine. Further, in the exhaust gas purification system disclosed in Japanese Laid-Open Patent Publication (Kokai) No. 2006-291788, the whole amount of particulates is not taken into account, and the deposition amount of soot and the deposition amount of SOF are separately determined. Therefore, for example, the deposition amount of soot sometimes becomes close to a soot amount threshold value, and at the same time the deposition amount of SOF sometimes becomes close to a SOF amount threshold value. In this state, pressure loss of the filter becomes too large, and hence more fuel is supplied to the engine in order to maintain the engine output, which further degrades fuel economy.

Further, in the exhaust gas purification system disclosed in Japanese Patent No. 4291627, only the PM deposition amount is calculated without calculating the SOF deposition amount or the soot deposition amount, and hence at a time point before executing the SOF elimination control, respective proportions of the SOF deposition amount and the soot deposition amount in the PM deposition amount are unknown. For this reason, for example, when the calculated PM deposition amount is equal to or larger than a predetermined value, it is sometimes determined that there is a fear of thermal runaway (phenomenon that the filter is overheated when particulates are burned) due to too large a soot deposition amount, and a DPF lamp is lighted to give a warning about it. Thermal runaway is caused, however, when there is deposited too large an amount of soot the combustion temperature of which is high, but in the case of SOF the combustion temperature of which is low, even when there is deposited a large amount of SOF, there is no possibility of occurrence of thermal runaway. Therefore, in the exhaust gas purification system disclosed in Japanese Patent No. 4291627, when the PM deposition amount is equal to or larger than the predetermined value due to a high proportion of the SOF deposition amount, the DPF lamp is sometimes erroneously lighted in spite of no possibility of occurrence of thermal runaway.

SUMMARY OF THE INVENTION

It is an object of the present invention to improve the generic exhaust gas purification system for an internal combustion engine, such that is capable of efficiently recovering a filter using a smaller amount of fuel, while preventing pressure loss of the filter from becoming too large, thereby making it possible to improve fuel economy of the engine.

To attain the above object, the present invention provides an exhaust gas purification system for an internal combustion engine with all feature of claim 1. Such an inventive system purifies exhaust gases by collecting particulates from exhaust gases emitted from the engine, including a filter which is disposed in an exhaust passage, for collecting particulates from exhaust gases, soot deposition amount-calculating means for calculating an amount of soot contained in particulates collected and deposited on the filter, as a soot deposition amount, and SOF deposition amount-calculating means for calculating an amount of SOF contained in the particulates deposited on the filter, as a SOF deposition amount, characterized by comprising particulate deposition amount-calculating means for calculating an amount of the particulates deposited on the filter based on the calculated soot deposition amount and the calculated SOF deposition amount, as a particulate deposition amount, and SOF elimination control means for executing SOF elimination control for eliminating the SOF deposited on the filter by controlling temperature of the filter to a temperature which is lower than a combustion temperature of the soot and at the same time not lower than a combustion temperature of the SOF lower than the combustion temperature of the soot, wherein the SOF elimination control means executes the SOF elimination control when the calculated particulate deposition amount is not smaller than a predetermined PM threshold value, and at the same time the SOF deposition amount is not smaller than a predetermined SOF amount threshold value.

With the configuration of this exhaust gas purification system, the soot deposition amount and the SOF deposition amount are separately calculated. Further, the particulate deposition amount is calculated based on the calculated soot deposition amount and the calculated SOF deposition amount. Therefore, it is possible to properly calculate the particulate deposition amount, and the calculated particulate deposition amount excellently represents a degree of pressure loss.

Further, since the SOF elimination control is executed when the particulate deposition amount is not smaller than the PM threshold value, and at the same time the SOF deposition amount is not smaller than the SOF amount threshold value, the SOF deposition amount is reduced, and accordingly the particulate deposition amount is also reduced. This makes it possible to prevent pressure loss from becoming too large.

SOF has characteristics that combustion temperature (ignition point) thereof is lower than that of soot. According to the present invention, the SOF elimination control is carried out by controlling the temperature of the filter to a temperature lower than the combustion temperature of soot but not lower than the combustion temperature of SOF, and hence it is possible to efficiently eliminate SOF and particulates using a smaller amount of fuel, thereby making it possible to improve fuel economy of the engine.

Further, since the SOF elimination control is executed when the particulate deposition amount is not smaller than the PM threshold value, and at the same time the SOF deposition amount is not smaller than the SOF amount threshold value, the particulate deposition amount never becomes equal to or larger than the predetermined PM threshold value in a state where the SOF deposition amount is too large. This makes it possible to prevent a DPF lamp from being erroneously lighted due to an erroneous determination that such a state may cause thermal runaway.

Preferably, the exhaust gas purification system further comprises soot elimination control means for executing soot elimination control for eliminating the soot deposited on the filter by controlling the temperature of the filter to a temperature not lower than the combustion temperature of the soot, and the soot elimination control means executes the soot elimination control when the particulate deposition amount is not smaller than the PM threshold value, and at the same time the SOF deposition amount is smaller than the SOF amount threshold value.

The fact that the particulate deposition amount is not smaller than the PM threshold value, and at the same time the SOF deposition amount is smaller than the SOF amount threshold value indicates that the soot amount is relatively large. Therefore, even assuming that the SOF elimination control is executed in this state, it soon becomes necessary to execute the soot elimination control. Further, since the combustion temperature of soot is higher than that of SOF, SOF is also eliminated together by the soot elimination control, so that if the soot elimination control is executed soon after executing the SOF elimination control, the fuel used in the SOF elimination control is wasted, which degrades fuel economy of the engine. According to the present invention, when the particulate deposition amount is not smaller than the PM threshold value, and at the same time the SOF deposition amount is smaller than the SOF amount threshold value, the soot elimination control is executed by controlling the temperature of the filter to the temperature not lower than the combustion temperature of soot, whereby it is possible to eliminate the SOF and soot together, which makes it possible to efficiently recover the filter using a smaller amount of fuel. Further, by executing the soot elimination control, it is possible to prevent the soot deposition amount from becoming too large, which makes it possible to prevent thermal runaway.

More preferably, the exhaust gas purification system further comprises elimination control-inhibiting means for inhibiting the SOF elimination control and the soot elimination control when the particulate deposition amount is smaller than the PM threshold value, and PM threshold value-setting means for setting the PM threshold value such that a degree of lowering of output of the engine caused by the particulates deposited on the filter becomes smaller than a predetermined value.

With the configuration of the preferred embodiment, execution of the SOF elimination control and the soot elimination control is inhibited when the particulate disposition amount is smaller than the PM threshold value, and hence it is possible to prevent the SOF elimination control and the soot elimination control from being executed in a state where it is not necessary to perform recovering of the filter yet since the pressure loss of the filter is small. Further, since the PM threshold value is set such that the degree of lowering of output of the engine caused by the particulates deposited on the filter becomes smaller than the predetermined value, the lowering of output of the engine caused by pressure loss of the filter is suppressed, which makes it possible to improve drivability.

Preferably, the exhaust gas purification system further comprises operating state-detecting means for detecting an operating state of the engine, after-injection means for performing after-injection of fuel after termination of main injection of fuel for obtaining output of the engine, and post-injection means for performing post-injection of fuel during an expansion stroke or an exhaust stroke of the engine later than the after-injection, and the SOF elimination control means carries out the post-injection irrespective of the detected operating state of the engine, and carries out the after-injection when the operating state of the engine is a low-load operating state, but inhibits the after-injection when the operating state of the engine is an idle operating state or a medium to high-load operating state.

With the configuration of the preferred embodiment, the post-injection is carried out irrespective of the operating state of the engine, whereas the after-injection is carried out according to the determined operating state of the engine. When the engine is in the low-load operating state, the after-injection is carried out, which raises the exhaust gas temperature, and by raising the temperature of the filter to a temperature at which the SOF elimination control and the soot elimination control can be executed, it is possible to properly recover the filter.

On the other hand, when the engine is in the idle operating state, if the after-injection is carried out, there is a fear that output of the engine is fluctuated. According to the present invention, since the after-injection is inhibited when the engine is in the idle operating state, it is possible to prevent the output of the engine from being fluctuated, which makes it possible to improve drivability. Further, when the engine is in the medium to high-load operating state, it is possible to raise the temperature of the filter to the temperature at which the SOF elimination control and the soot elimination control can be executed, by controlling the amount of intake air drawn into the engine, without carrying out the after-injection. According to the present invention, the after-injection is inhibited when the engine is in the medium to high-load operating state, and hence it is possible to prevent the after-injection from being unnecessarily carried out, which makes it possible to further improve fuel economy.

The above and other objects, features, and advantages of the present invention will become more apparent from the following detailed description taken in conjunction with the accompanying drawings.

BRIEF DESCRIPTION OF THE DRAWINGS

FIG. 1 is a schematic diagram of an internal combustion engine to which is applied an exhaust gas purification system according to an embodiment of the present invention;
FIG. 2 is a flowchart of a main flow of a control process executed by the exhaust gas purification system;
FIG. 3 is a flowchart of a process for calculating a distance-time integrated value;
FIG. 4 is a flowchart of a process for calculating a SOF deposition amount;
FIG. 5 is a flowchart of an execution determination process for determining whether or not to carry out after-injection during the SOF elimination control;

FIG. 6 is a map for setting a margin amount of a PM threshold value;

FIG. 7 is a map for determining an operating state of the engine; and

FIG. 8 is a timing diagram showing an example of an operation of the exhaust gas purification system performed by a process for recovering a filter.

## DETAILED DESCRIPTION OF PREFERRED EMBODIMENTS

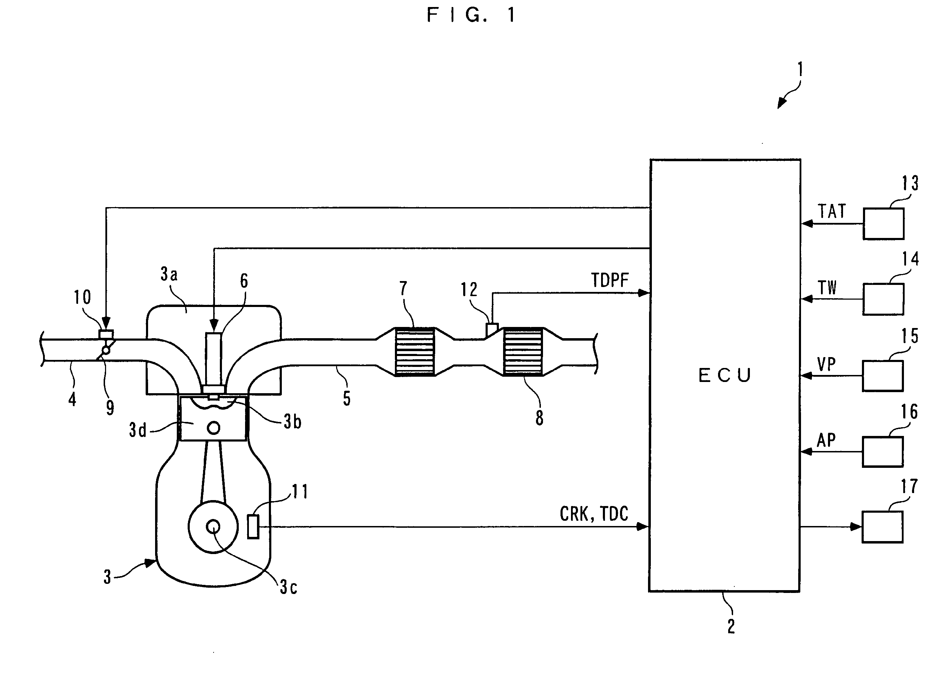

The invention will now be described in detail with reference to drawings showing a preferred embodiment thereof. FIG. 1 schematically shows an exhaust gas purification system 1 according to the present embodiment, together with an internal combustion engine 3. The internal combustion engine (hereinafter referred to as "the engine 3") is a four-cylinder diesel engine installed on a vehicle (not shown).

Each cylinder 3a of the engine 3 has an intake pipe 4 and an exhaust pipe 5 connected thereto, with a fuel injection valve 6 (hereinafter referred to as "the injector 6") mounted therein such that it faces a combustion chamber 3b. The injector 6 is inserted into the combustion chamber 3b through a central portion of the top wall thereof, and injects fuel supplied from a fuel tank (not shown) into the combustion chamber 3b. The opening and closing of the injector 6 are controlled by a control signal from an ECU 2, whereby fuel injection timing is controlled by valve-opening timing, and a fuel injection amount is controlled by a valve-opening time period.

A crank angle sensor 11 is provided for a crankshaft 3c of the engine 3. The crank angle sensor 11 delivers a TDC signal and a CRK signal, which are both pulse signals, to the ECU 2 along with rotation of the crankshaft 3c.

The TDC signal indicates that a piston 3d of one of the cylinders 3a is at a predetermined crank angle position in the vicinity of the top dead center (TDC) at the start of the intake stroke thereof, and in the case of the four-cylinder engine of the illustrated example, it is delivered whenever the crankshaft 3c rotates through 180 °. The CRK signal is delivered whenever the crankshaft rotates through a predetermined angle (e.g. 30 ° ). The ECU 2 calculates the rotational speed NE of the engine 3 (hereinafter referred to as "the engine speed NE") based on the CRK signal.

Further, the intake pipe 4 has an intake shutter 9 provided therein. An actuator 10 is connected to the intake shutter 9 for actuating the intake shutter 9. The actuator 10 is formed by a combination of a motor and a gear mechanism (neither of which is shown), and is driven by a control signal from the ECU 2. This varies the opening of the intake shutter 9, whereby the amount of intake air drawn into each cylinder 3a is controlled and in turn the exhaust flow rate is controlled.

Further, an oxidation catalyst 7 and a filter 8 are provided in the exhaust pipe 5 at respective upstream to downstream locations. The oxidation catalyst 7 oxidizes HC and CO in exhaust gases to thereby purify exhaust gases. The filter 8 collects particulates (particulate matter: hereinafter referred to as "PM"), including soot as solid carbon fraction and SOF as soluble organic fraction, contained in exhaust gases, to thereby reduce the amount of PM emitted into the air. Further, on a surface of the filter 8, there is supported a catalyst (not shown) similar to the oxidation catalyst 7.

A DPF temperature sensor 12 is provided in the exhaust pipe 5 at a location immediately upstream of the filter 8. The DPF temperature sensor 12 detects temperature of exhaust gases at a portion of the exhaust pipe 5 immediately upstream of the filter 8 as a temperature TDPF of the filter 8 (hereinafter referred to as "the filter temperature TDPF"), and delivers a signal indicative of the detected filter temperature TDPF to the ECU 2.

Further, delivered to the ECU 2 are a detection signal indicative of an ambient air temperature TAT from an ambient air temperature sensor 13, a temperature TW of engine coolant circulating through a cylinder block of the engine 3 (hereinafter referred to as the "engine coolant temperature TW") from a coolant temperature sensor 14, a detection signal indicative of a speed VP of the vehicle on which the engine 3 is installed (hereinafter referred to as "the vehicle speed VP") from a vehicle speed sensor 15, and a detection signal indicative of an operation amount AP of an accelerator pedal (not shown) of the vehicle (hereinafter referred to as "the accelerator pedal opening AP") from an accelerator pedal opening sensor 16.

Further, a DPF lamp 17 is connected to the ECU 2. When the amount of particulates deposited on the filter 8 (hereinafter referred to as "the PM deposition amount") becomes very large, it is judged that there is a possibility that thermal runaway is caused, and the DPF lamp 17 notifies a driver of the vehicle of the fact by being slighted.

The ECU 2 is implemented by a microcomputer comprising an I/O interface, a CPU, a RAM, and a ROM (none of which are specifically shown). The detection signals from the aforementioned sensors 11 to 16 are input to the CPU after the I/O interface performs A/D conversion and waveform shaping thereon. Based on the detection signals from the above-mentioned various types of sensors, the ECU 2 determines operating conditions of the engine 3 and a state of the filter 8 in accordance with control programs stored in the ROM, and carries out various kinds of engine control based on results of the determination.

In the present embodiment, the ECU 2 corresponds to soot deposition amount-calculating means, SOF deposition amount-calculating means, particulate deposition amount-calculating means, SOF elimination control means, soot elimination control means, elimination control-inhibiting means, and PM threshold value-setting means.

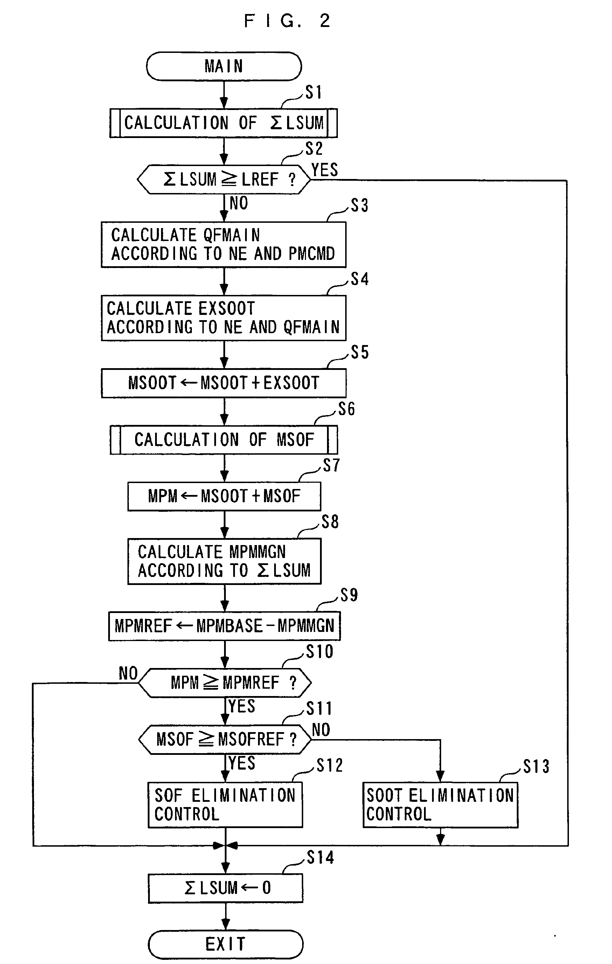

FIG. 2 shows a main flow of a control process executed by the ECU 2. The present process is executed at a predetermined repetition period AT. In the present process, first, in a step 1 (shown as S1 in abbreviated form in FIG. 2; the following steps are also shown in abbreviated form), a distance-time integrated value $\Sigma$LSUM is calculated. The distance-time integrated value $\Sigma$LSUM is obtained by integrating the product of traveling distance and time of the vehicle under such a situation where SOF is being emitted from the engine 3. A process for calculating the distance-time integrated value $\Sigma$LSUM will be described hereinafter.

Next, in a step 2, it is determined whether or not the calculated distance-time integrated value $\Sigma$LSUM is not smaller than a predetermined threshold value LREF. If the answer to this question is affirmative (YES), i.e. if the distance-time integrated value $\Sigma$LSUM has reached the predetermined threshold value LREF, the distance-time integrated value $\Sigma$LSUM is reset to 0 in a step 14, followed by terminating the present process.

On the other hand, if the answer to the question of the step 2 is negative (NO), i.e. if the distance-time integrated value $\Sigma$LSUM does has not reached the predetermined threshold value LREF, the process proceeds to a step 3, wherein a fuel injection amount QFMAIN by the main injection (hereinafter referred to as "the main injection amount QFMAIN") is calculated by searching a predetermined map (not shown) according to the engine speed NE and demanded torque PMCMD. The main injection is carried out by injecting fuel during the compression stroke of the engine 3 so as to obtain output by combustion of the fuel. Further, the demanded torque PMCMD is calculated by searching a predetermined map (not shown) according to the engine speed NE and the accelerator pedal opening AP.

Next, in a step 4, an amount EXSOOT of soot emitted from the engine 3 (hereinafter referred to as "the soot emission amount EXSOOT"), which corresponds to the current processing cycle, is calculated by searching a predetermined map (not shown) according to the engine speed NE and the main injection amount QFMAIN.

Next, in a step 5, the calculated soot emission amount is added to an amount MSOOT of soot deposited on the filter 8 (hereinafter referred to as "the soot deposition amount MSOOT") which was cumulatively calculated up to last time to thereby calculate the current soot deposition amount MSOOT.

Next, in a step 6, an amount MSOF of SOF deposited on the filter 8 (hereinafter referred to as "the SOF deposition amount MSOF") is calculated. A process for calculating the SOF deposition amount MSOF will be described hereinafter. Next, in a step 7, a PM deposition amount MPM is calculated by adding the calculated SOF deposition amount MSOF to the soot deposition amount MSOOT calculated in the step 5 (= MSOF + MSOOT).

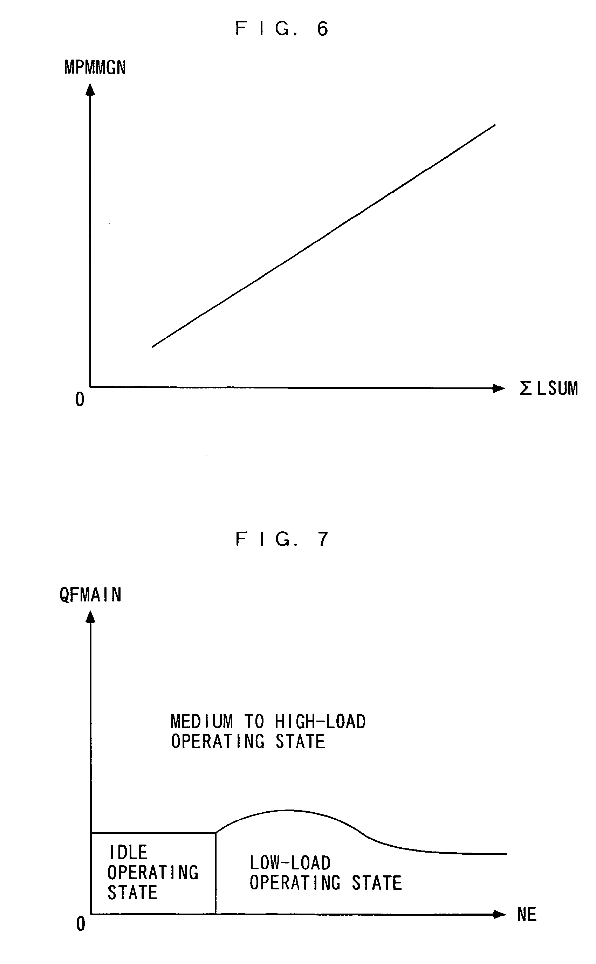

Next, in a step 8, a margin amount MPMMGN is calculated by searching a map shown in FIG. 6 according to the distance-time integrated value $\Sigma$LSUM calculated in the step 1. The margin amount MPMMGN corresponds to a deposition amount of oil ash deposited on the filter 8. In this map, as the distance-time integrated value $\Sigma$LSUM is larger, the margin amount MPMMGN is set to a larger value.

Next, in a step 9, the difference between a predetermined basic value MPMBASE (e.g. 30g) and the margin amount MPMMGN calculated in the step 8 is calculated (= MPMBASE - MPMMGN) as a PM threshold value MPMREF. As mentioned above, since the margin amount MPMMGN is set to a larger value as the distance-time integrated value $\Sigma$ LSUM is larger, the PM threshold value MPMREF is set to a smaller value as the distance-time integrated value $\Sigma$LSUM is larger. This is for the following reason:

As the distance-time integrated value $\Sigma$LSUM is larger, the deposition amount of oil ash on the filter 8 increases. Further, as the deposition amount of oil ash increases, the pressure loss of the filter 8 becomes larger. Therefore, the PM threshold value MPMREF is set to a smaller value as the distance-time integrated value $\Sigma$LSUM is larger to reduce the PM deposition amount MPM when the SOF elimination control and the soot elimination control are started, whereby it is possible to suppress such an increase in pressure loss caused by an increase in the deposition amount of oil ash as mentioned above.

Next, in a step 10, it is determined whether or not the PM deposition amount MPM calculated in the step 7 is not smaller than the PM threshold value MPMREF. If the answer to this question is negative (NO), i.e. if the PM deposition amount MPM has not reached the PM threshold value MPMREF, the present process is immediately terminated. On the other hand, if the answer to the question of the step 10 is affirmative (YES), i.e. if the PM deposition amount MPM is equal to larger than the PM threshold value MPMREF, in a step 11, it is determined whether or not the SOF deposition amount MSOF calculated in the step 6 is not smaller than a predetermined SOF amount threshold value MSOFREF (e.g. 5g).

If the answer to this question is affirmative (YES), i.e. if the SOF deposition amount MSOF is equal to or larger than the predetermined SOF amount threshold value MSOFREF, the SOF elimination control is executed in a step 12. The SOF elimination control is executed by carrying out the post-injection in which fuel is injected during the expansion stroke or the exhaust stroke of the engine 3, in addition to the main injection. Unburned fuel contained in exhaust gases, which is supplied by the post-injection, is burned by oxidation reaction in the oxidation catalyst 7 to thereby raise the temperature of exhaust gases so as to control the filter temperature TDPF to a SOF elimination temperature TSOFREM (e.g. 350 °C) which is not lower than a SOF combustion temperature TSOF (approximately 300 °C), whereby the SOF is burned and eliminated. After execution of the SOF elimination control, the process proceeds to the step 14, wherein the distance-time integrated value $\Sigma$SUM is reset to 0, followed by terminating the present process.

On the other hand, if the answer to the question of the step 11 is negative (NO), i.e. if the SOF deposition amount MSOF is smaller than the predetermined SOF amount threshold value MSOFREF, the soot elimination control is executed in a step 13. The soot elimination control is executed by carrying out the post-injection by injecting a larger amount of fuel than that in the SOF elimination control, in addition to the main injection. Further, by controlling the filter temperature TDPF to a soot elimination temperature TSOOTREM (e.g. 650 °C) not lower than a soot combustion temperature TSOOT (approximately 600 °C), the SOF and soot are burned and eliminated together. The present process is terminated after executing the step 14.

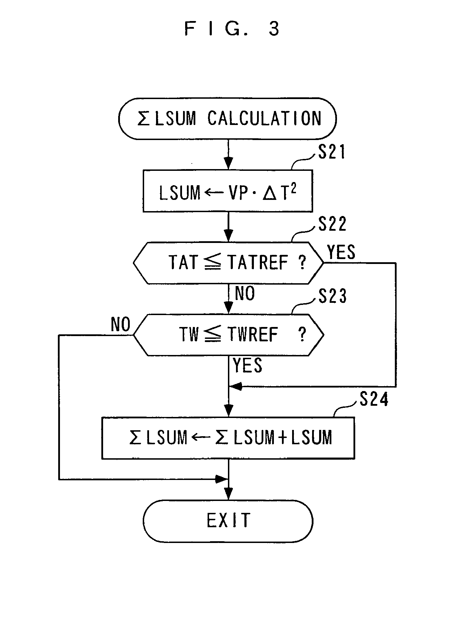

FIG. 3 shows a process executed in the step 1 in FIG. 2, for calculating the distance-time integrated value E LSUM. In the present process, first, in a step 21, a distance-time product LSUM is calculated by the following equation (1) using the detected vehicle speed VP and the repetition period ∆T of execution of the present process:

$$\mathrm{LSUM} = \mathrm{VP} \cdot \Delta\mathrm{T}^2 \qquad \cdots (1)$$

wherein VP · ∆T in the right side represents traveling distance of the vehicle, which corresponds to the current processing cycle, and ∆T represents traveling time.

Next, in a step 22, it is determined whether or not the detected ambient air temperature TAT is not higher than a predetermined threshold value TATREF (e.g. 5 °C), and in a step 23, it is determined whether or not the detected engine coolant temperature TW is not higher than a predetermined threshold value TWREF (e.g. 15 °C).

If one of the answers to the questions of these steps 22 and 23 is affirmative (YES), i.e. if TAT ≦ TATREF or TW ≦ TWREF holds, it is judged that the ambient air temperature TAT and/or the engine coolant temperature TW are/is low, and hence SOF is being emitted from the engine 3, so that in a step 24, the current distance-time integrated value ∑LSUM is calculated by adding the distance-time product LSUM calculated in the step 21 to the distance-time integrated value ∑LSUM that was cumulatively calculated up to last time, followed by terminating the present process.

On the other hand, if both of the answers to the questions of the steps 22 and 23 are negative (NO), i.e. if both of TAT > TATREF and TW > TWREF hold, the process skips over the step 24, and is terminated without adding the distance-time product LSUM.

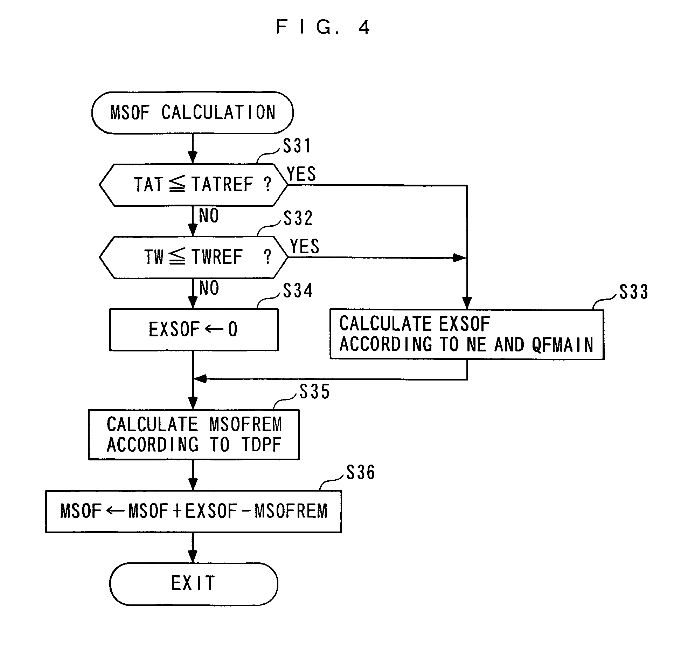

FIG. 4 shows a process executed in the step 6 in FIG. 2, for calculating the SOF deposition amount MSOF. In the present process, first, similarly to the steps 22 and 23 in FIG. 3, in a step 31, it is determined whether or not the ambient air temperature TAT is not higher than the threshold value TATREF, and in a step 32, it is determined whether or not the engine coolant temperature TW is not higher than the threshold value TWREF.

If one of the answers to the questions of these steps 31 and 32 is affirmative (YES), i.e. if TAT ≦ TATREF or TW ≦ TWREF holds, it is judged that the ambient air temperature TAT and/or the engine coolant temperature TW are/is low, and hence SOF is being emitted from the engine 3, so that in a step 33, an amount EXSOF of SOF emitted from the engine 3 in the current processing cycle (hereinafter referred to as "the SOF emission amount EXSOF") is calculated by searching a predetermined map (not shown) according to the engine speed NE and the main injection amount QFMAIN, and then the process proceeds to a step 35.

On the other hand, if both of the answers to the questions of the steps 31 and 32 are negative (NO), i.e. if both of TAT > TATREF and TW > TWREF hold, the SOF emission amount EXSOF is set to 0 in a step 34, and then the process proceeds the step 35.

In the step 35 following the step 33 or 34, an amount MSOFREM of SOF which is eliminated from the filter 8 in the current processing cycle (hereinafter referred to as "the SOF elimination amount MSOFREM") is calculated by searching a predetermined map (not shown) according to the detected filter temperature TDPF. In this map, as the filter temperature TDPF is higher, the SOF elimination amount MSOFREM is set to a larger value.

Next, in a step 36, the current SOF deposition amount MSOF is calculated by the following equation (2) using the SOF emission amount EXSOF and the SOF elimination amount MSOFREM:

$$\mathrm{MSOF} = \mathrm{MSOF} + \mathrm{EXSOF} - \mathrm{MSOFREM} \qquad \cdots (2)$$

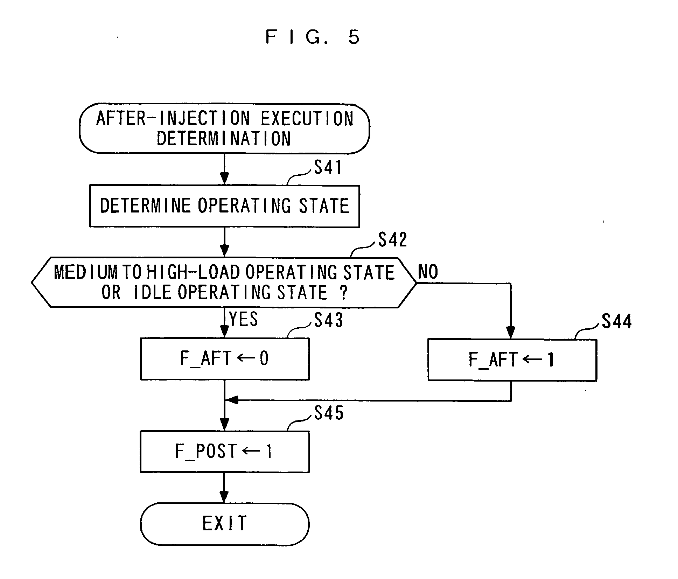

FIG. 5 shows an execution determination process for determining whether or not to carry out after-injection during the SOF elimination control. In the present process, first, in a step 41, a map shown in FIG. 7 is searched according to the engine speed NE and the main injection amount QFMAIN, whereby it is determined which of a medium to high-load operating state, a low-load operating state, and an idle operating state, the engine 3 is in. In this map, a region in which the engine speed NE and the main injection amount QFMAIN are both small is set as the idle operating state, a region in which the engine speed NE is approximately medium or higher and at the same time the main injection amount QFMAIN is small is set as the low-load operating state, and the other region, i.e. a region in which the main injection amount QFMAIN is approximately medium or higher is set as the medium to high-load operating state.

Next, in a step 42, it is determined whether or not the determined operating state of the engine 3 is the medium to high-load operating state or the idle operating state. If the answer to this question is affirmative (YES), i.e. if the engine 3 is in the idle operating state or in the medium to high-load operating state, it is judged that the after-injection should be inhibited. To indicate this fact, an after-injection flag F_AFT is set to 0 in a step 43, and then the process proceeds to a step 45.

On the other hand, if the answer to the question of the step 42 is negative (NO), i.e. if the engine 3 is in the low-load operating state, it is judged that the after-injection should be carried out. To indicate this fact, the after-injection flag F_AFT is set to 1 in a step 44, and then the process proceeds to the step 45.

In the step 45 following the step 43 or 44, to carry out the post-injection irrespective of the determined operating condition of the engine 3, a post-injection flag F_POST is set to 1, followed by terminating the present process.

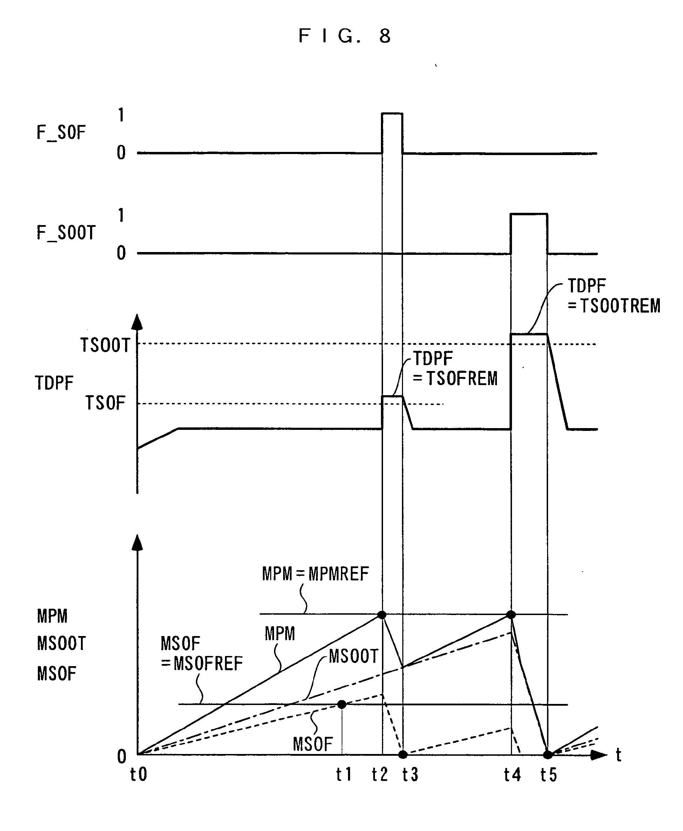

FIG. 8 shows an example of an operation of the exhaust gas purification system performed by a process for recovering the filter 8. In this example, the engine 3 is started at a time point t0, and the SOF deposition amount MSOF and the soot deposition amount MSOOT increase as time "t" elapses thereafter, so that the PM deposition amount MPM as the sum of these amounts also increases. Even when the SOF deposition amount MSOF exceeds the SOF amount threshold value MSOFREF (t1), the PM deposition amount MPM has not reached the PM threshold value MPMREF yet (NO to the step 10 in FIG. 2), and hence neither the SOF elimination control nor the soot elimination control is executed. Thereafter, the SOF deposition amount MSOF, the soot deposition amount MSOOT, and the PM deposition amount MPM continue to increase.

Then, when the PM deposition amount MPM reaches the PM threshold value MPMREF (t2), combined with the fact that the SOF deposition amount MSOF has already exceeded the SOF amount threshold value MSOFREF, both of the answers to the questions of the steps 10 and 11 in FIG. 2 are affirmative (YES), so that a SOF elimination control flag F_SOF is set to 1, and the SOF elimination control is started (step 12 in FIG. 2).

This SOF elimination control causes the filter temperature TDPF to be controlled to the SOF elimination temperature TSOFREM which is higher than the SOF combustion temperature TSOF, whereby the SOF deposited on the filter 8 is burned and eliminated, so that the SOF deposition amount MSOF is reduced to 0 (t3). The PM deposition amount MPM is also reduced by an amount equal to the reduced amount of the SOF deposition amount MSOF. On the other hand, the soot combustion temperature TSOOT is higher than the SOF elimination temperature TSOFREM, and hence the soot deposition amount does not change even if the SOF elimination control is executed. Therefore, at the time point t3, the PM deposition amount MPM is equal to the soot deposition amount MSOOT.

Thereafter, when the PM deposition amount MPM which has been reduced by the SOF elimination control increases again to reach the PM threshold value MPMREF again (t4), the SOF deposition amount MSOF does not reach the SOF amount threshold value MSOFREF yet at this time point (NO to the step 11), and hence a soot elimination control execution flag F_SOOT is set to 1 to start the soot elimination control (step 13 in FIG. 2).

This soot elimination control causes the filter temperature TDPF to be controlled to the soot elimination temperature TSOOTREM higher than both of the SOF combustion temperature TSOF and the soot combustion temperature TSOOT, whereby the SOF and soot deposited on the filter 8 are burned and eliminated, so that the SOF deposition amount MSOF and the soot deposition amount MSOOT are both reduced to 0, and accordingly the PM deposition amount is also reduced to 0 (t5).

As described above, according to the present embodiment, the SOF elimination control is executed when the PM deposition amount MPM is equal to or larger than the PM threshold value MPMREF and at the same time the SOF deposition amount MSOF is equal to or larger than the SOF amount threshold value MSOFREF. Therefore, it is possible to prevent pressure loss from becoming too large. Further, the SOF elimination control is executed by controlling the filter temperature TDPF to the SOF elimination temperature TSOFREM lower than the soot combustion temperature TSOOT but higher than the SOF combustion temperature TSOF. Therefore, it is possible to efficiently burn and eliminate the SOF and PM using a smaller amount of fuel, whereby it is possible to improve fuel economy.

Further, the SOF elimination control is executed when the PM deposition amount MPM is not smaller than the PM threshold value MPMREF and at the same time the SOF deposition amount MSOF is not smaller than the SOF amount threshold value MSOFREF, so that the PM deposition amount MPM never becomes equal to or larger than the PM threshold value MPMREF in a state where the SOF deposition amount MSOF is too large. This makes it possible to prevent the DPF lamp 17 from being erroneously lighted due to an erroneous determination that such a state may cause thermal runaway.

Further, when the PM deposition amount MPM is not smaller than the PM threshold value MPMREF, and at the same time the SOF deposition amount MSOF is smaller than the SOF amount threshold value MSOFREF, the soot elimination control is executed by controlling the filter temperature TDPF to the soot elimination temperature TSOOTREM higher than the soot combustion temperature TSOOT, whereby it is possible to burn and eliminate SOF and soot together, and thereby efficiently perform recovering the filter 8 using a smaller amount of fuel. Further, by executing the soot elimination control, it is possible to prevent the soot deposition amount MSOOT from becoming too large, and as a result prevent thermal runaway.

Further, the SOF elimination control and the soot elimination control are inhibited when the PM deposition amount MPM is smaller than the PM threshold value MPMREF. This makes it possible to prevent the SOF elimination control and the soot elimination control from being executed in a state where it is not necessary to perform recovering of the filter 8 yet since the pressure loss of the filter 8 is small. Further, the PM threshold value MPMREF is set to a smaller value as the distance-time integrated value ∑LSUM is larger. This makes it possible to suppress increase in pressure loss caused by an increase in the deposition amount of oil ash, whereby it is possible to secure output of the engine 3.

Further, the after-injection is carried out when the engine 3 is in the low-load operating state. This raises temperature of exhaust gases to thereby raise the filter temperature TDPF to a temperature at which the SOF elimination control and the soot elimination control can be executed, whereby it is possible to properly perform recovering of the filter 8. Further, the after-injection is inhibited when the engine 3 is in the idle operating state, which makes it possible to prevent output of the engine 3 from being fluctuated, and thereby improve drivability. Furthermore, the after-injection is inhibited when the engine 3 is in the medium to high-load operating state, which makes it possible to prevent the after-injection from being unnecessarily carried out, and thereby further improve fuel economy.

It should be noted that the present invention is by no means limited to the embodiment described above, but it can be practiced in various forms. For example, although in the above-described embodiment, the PM deposition amount MPM is calculated as a value equal to the sum of the SOF deposition amount MSOF and the soot deposition amount MSOOT, this is not limitative, but the calculation of the PM deposition amount MPM based on the soot deposition amount MSOOT and the SOF deposition amount MSOF is enough. For example, the PM deposition amount MPM may be calculated by adding a predetermined addition term to the above-mentioned sum, or multiplying the above-mentioned sum by a predetermined coefficient.

Further, although in the above-described embodiment, as parameters for use in calculating the SOF deposition amount MSOF and the soot deposition amount MSOOT, the engine speed NE and the main injection amount QFMAIN are used, in addition to or in place of these, any other parameters having correlations with the SOF deposition amount and the soot deposition amount may be used. Further, although the calculations of the SOF deposition amount MSOF and the soot deposition amount MSOOT are performed by respective integral or cumulative integrations, the calculations may be performed by any other suitable method.

Further, although in the above-described embodiment, the after-injection and the post-injection are carried out by injection of fuel from the injector 6 mounted on each cylinder 3a, in place of this, another injector may be mounted to the exhaust pipe 5, and unburned fuel may be supplied into the exhaust pipe 5 from this injector.

Further, although in the above-described embodiment, the engine speed NE and the main injection amount QFMAIN are used as parameters for use in determining an operating state of the engine 3, in addition to or in place of these, any other parameter indicative of an operating state of the engine 3, e.g. an intake air amount and the demanded torque PMCMD may be used.

Further, although in the above-described embodiment, the DPF temperature sensor 12 for detecting the filter temperature TDPF is disposed in the exhaust pipe 5 at a location immediately upstream of the filter 8, the DPF temperature sensor 12 may be disposed directly on the filter 8. Further, instead of detecting the filter temperature TDPF by the DPF temperature sensor 12 as above, the filter temperature TDPF may be estimated from the operating conditions of the engine 3 or the like.

Further, although in the above-described embodiment, the present invention is applied to a diesel engine installed on a vehicle, by way of example, this is not limitative, but the present invention can be applied not only to the diesel engine but also to various types of engines, such as a gasoline engine. Further, the present invention can also be applied to engines other than engines for vehicles, including engines for ship propulsion machines, such as an outboard motor having a vertically-disposed crankshaft.

## Claims

1.  An exhaust gas purification system (1) for an internal combustion engine, which purifies exhaust gases by collecting particulates from exhaust gases emitted from the engine (3), including:

    a filter (8) which is disposed in an exhaust passage (5), for collecting particulates from exhaust gases,
    soot deposition amount-calculating means (2) for calculating an amount of soot contained in particulates collected and deposited on said filter (8), as a soot deposition amount (MSOOT),
    SOF deposition amount-calculating means (2) for calculating an amount of SOF contained in the particulates deposited on said filter (8), as a SOF deposition amount (MSOF), and
    particulate deposition amount-calculating means (2) for calculating an amount of the particulates deposited on said filter (8) based on the calculated soot deposition amount (MSOOT) and the calculated SOF deposition amount (MSOF), as a particulate deposition amount (MPM),

**characterized by** comprising:

SOF elimination control means (2) for executing SOF elimination control for eliminating the SOF deposited on said filter (8) by controlling temperature (TDPF) of said filter (8) to a temperature which is lower than a combustion temperature (TSOOT) of the soot and at the same time not lower than a combustion temperature (TSOF) of the SOF lower than the combustion temperature of the soot,

wherein said SOF elimination control means executes the SOF elimination control when the calculated particulate deposition amount (MPM) is not smaller than a predetermined PM threshold value (MPM-REF), and at the same time the SOF deposition amount is not smaller than a predetermined SOF amount threshold value (MSOFREF).

2. The exhaust gas purification system (1) as claimed in claim 1, further comprising soot elimination control means (2) for executing soot elimination control for eliminating the soot deposited on said filter (8) by controlling the temperature of said filter (8) to a temperature not lower than the combustion temperature of the soot, and wherein said soot elimination control means executes the soot elimination control when the particulate deposition amount (MPM) is not smaller than the PM threshold value (MPMREF), and at the same time the SOF deposition amount is smaller than the SOF amount threshold value (MSOFREF).

3. The exhaust gas purification system (1) as claimed in claim 2, further comprising:

elimination control-inhibiting means (2) for inhibiting the SOF elimination control and the soot elimination control when the particulate deposition amount (MPM) is smaller than the PM threshold value (MPMREF); and PM threshold value-setting means (2) for setting the PM threshold value (MPMREF) such that a degree of lowering of output (NE) of the engine (3) caused by the particulates deposited on said filter (8) becomes smaller than a predetermined value.

4. The exhaust gas purification system (1) as claimed in claim 1 or 3, further comprising:

operating state-detecting means (11) for detecting an operating state of the engine (3); after-injection means (6) for performing after-injection of fuel after termination of main injection of fuel for obtaining output of the engine (3); and post-injection means (6) for performing post-injection of fuel during an expansion stroke or an exhaust stroke of the engine later than the after-injection, and wherein said SOF elimination control means carries out the post-injection irrespective of the detected operating state of the engine, and carries out the after-injection when the operating state of the engine (3) is a low-load operating state, but inhibits the after-injection when the operating state of the engine (3) is an idle operating state or a medium to high-load operating state.

**Patentansprüche**

1. Abgasreinigungssystem (1) für einen Verbrennungsmotor, das Abgase reinigt, indem es Partikel aus von dem Motor (3) abgegebenen Abgasen sammelt, enthaltend:

einen Filter (8), der in einem Auspuffkanal (5) angeordnet ist, um Partikel aus Abgasen zusammeln, ein Rußablagerungsmengenberechnungsmittel (2) zum Berechnen einer Rußmenge, die in den gesammelten Partikeln enthalten ist und sich auf dem Filter (8) abgelagert hat, als Rußablagerungsmenge (MSOOT), ein SOF-Ablagerungsmengenberechnungsmittel (2) zum Berechnen einer SOF-Menge, die in den auf dem Filter (8) abgelagerten Partikeln enthalten ist, als SOF-Ablagerungsmenge (MSOF), und ein Partikelablagerungsmengenberechnungsmittel (2) zum Berechnen einer Menge der auf dem Filter (8) abgelagerten Partikel basierend auf der berechneten Rußablagerungsmenge (MSOOT) und der berechneten SOF-Ablagerungsmenge (MSOF) als Partikelablagerungsmenge (MPM), ein SOF-Beseitungssteuerungsmittel (2) zum Ausführen einer SOF-Beseitigungssteuerung zum Beseitigen des auf dem Filter (8) abgelagerten SOF durch Steuern/Regeln der Temperatur (TDPF) des Filters (8) auf eine Temperatur, die niedriger ist als eine Verbrennungstemperatur (TSOOT) des Rußes und gleichzeitig nicht niedriger ist als eine Verbrennungstemperatur (TSOF) des SOF, die niedriger ist als die Verbrennungstemperatur des Rußes,

worin das SOF-Beseitigungssteuerungsmittel die SOF-Beseitigungssteuerung ausführt, wenn die berechnete Partikelablagerungsmenge (MPM) nicht geringer ist als ein vorbestimmter PM-Schwellenwert (MPM-REF) ist und gleichzeitig die SOF-Ablagerungsmenge nicht geringer als ein vorbestimmter SOF-Mengenschwellenwert (MSOFREF) ist.

2. Abgasreinigungssystem (1) nach Anspruch 1, das ferner ein Rußbeseitigungssteuerungsmittel (2) zum Ausführen einer Rußbeseitigungssteuerung aufweist, um den auf dem Filter (8) abgelagerten Ruß zu beseitigen, durch Steuern/Regeln der Temperatur des Filters (8) auf eine Temperatur, die nicht niedriger als die Verbrennungstemperatur des Rußes ist, und

worin das Rußbeseitigungssteuermittel die Rußbeseitigungssteuerung ausführt, wenn die Partikelablagerungsmenge (MPM) nicht geringer als das PM-Schwellenwert (MPMREF) ist und gleichzeitig die SOF-Ablagerungsmenge geringer als der SOF-Mengenschwellenwert (MSOFREF) ist.

3. Das Abgasreinigungssystem (1) nach Anspruch 2, ferner umfassend:

ein Beseitigungssteuerungsverhinderungsmittel (2) zum Verhindern der SOF-Beseitigungssteuerung und der Rußbeseitigungssteuerung, wenn die Partikelablagerungsmenge (MPM) geringer als der PM-Schwellenwert (MPMREF) ist; und

ein PM-Schwellenwertsetzmittel (2) zum Setzen des PM-Schwellenwerts (MPMREF) derart, dass ein durch die auf dem Filter (8) abgelagerten Partikel verursachter Abnahmegrad der Leistung (NE) des Motors (3) kleiner als ein vorbestimmter Wert wird.

4. Das Abgasreinigungssystem (1) nach Anspruch 1 oder 3, ferner umfassend:

ein Betriebszustanderfassungsmittel (11) zum Erfassen eines Betriebszustands des Motors (3);

ein Nacheinspritzmittel (6) zur Durchführung einer Kraftstoffnacheinspritzung nach Beendigung der Kraftstoffhaupteinspritzung zum Leistungserhalt des Motors (3); und

ein Nacheinspritzmittel (6) zur Durchführung einer Kraftstoffnacheinspritzung während eines Arbeitstakts oder Auslasstakts des Motors nach der Nacheinspritzung, und

worin das SOF-Beseitigungssteuerungsmittel die Nacheinspritzung unabhängig vom erfassten Betriebszustand des Motors ausführt und die Nacheinspritzung ausführt, wenn der Betriebszustand des Motors (3) im Niederlastbetriebszustand ist, aber die Nacheinspritzung verhindert, wenn der Betriebszustand des Motors (3) ein Leerlaufbetriebszustand oder ein Mittel- bis Hochlastbetriebszustand ist.

**Revendications**

1. Système de purification des gaz d'échappement (1) pour un moteur à combustion interne, qui purifie des gaz d'échappement en collectant des particules des gaz d'échappement émis par le moteur (3), incluant :

un filtre (8) qui est disposé dans un passage d'échappement (5), pour collecter les particules des gaz d'échappement,

un moyen de calcul de quantité de dépôt de suie (2) pour calculer une quantité de suie contenue dans les particules collectées et déposées sur ledit filtre (8), en tant que quantité de dépôt de suie (MSOOT),

un moyen de calcul de quantité de dépôt de SOF (fraction organique soluble) (2) pour calculer une quantité de SOF contenue dans les particules déposées sur ledit filtre (8), en tant que quantité de dépôt de SOF (MSOF), et

un moyen de calcul de quantité de dépôt de particules (2) pour calculer une quantité des particules déposées sur ledit filtre (8) en se basant sur la quantité de dépôt de suite calculée (MSOOT) et la quantité de dépôt de SOF calculée (MSOF), en tant que quantité de dépôt de particules (MPM),

**caractérisé en ce qu'**il comprend :

un moyen de commande d'élimination de SOF (2) pour exécuter une commande d'élimination de SOF pour éliminer la SOF déposée sur ledit filtre (8) en commandant la température (TDPF) dudit filtre (8) à une température qui est inférieure à une température de combustion (TSOOT) de la suie et dans le même temps, non inférieure à une température de combustion (TSOF) de la SOF inférieure à la température de combustion de la suie,

dans lequel ledit moyen de commande d'élimination de SOF exécute la régulation d'élimination de SOF lorsque la quantité de dépôt de particules calculée (MPM) est non inférieure à une valeur de seuil PM (matières particulaires) prédéterminée (MPM-REF), et dans le même temps la quantité de dépôt de SOF est non inférieure à une valeur de seuil de quantité de SOF prédéterminée (MSOFREF).

2. Système de purification des gaz d'échappement (1) selon la revendication 1, comprenant en outre un moyen de commande d'élimination de suie (2) pour exécuter une commande d'élimination de suie pour éliminer la suie déposée sur ledit filtre (8) en commandant la température dudit filtre (8) à une température non inférieure à la température de combustion de la suie, et

dans lequel ledit moyen de commande d'élimination de suie exécute la commande d'élimination de suie lorsque la quantité de dépôt de particules (MPM) est non inférieure à la valeur de seuil PM (MPMREF), et en même temps, la quantité de dépôt de SOF est inférieure à la valeur de seuil de quantité de SOF (MSOFREF).

3. Système de purification des gaz d'échappement (1) selon la revendication 2, comprenant en outre :

un moyen d'inhibition de commande d'élimination (2) pour inhiber la commande d'élimination de SOF et la commande d'élimination de suie lorsque la quantité de dépôt de particules (MPM) est inférieure à la valeur de seuil PM (MPMREF) ; et

un moyen de réglage de valeur de seuil PM (2) pour régler la valeur de seuil PM (MPMREF) de telle sorte qu'un degré de réduction d'une puissance de sortie (NE) du moteur (3) provoqué par les particules déposées sur ledit filtre (8) devient inférieur à une valeur prédéterminée.

4. Système de purification des gaz d'échappement (1) selon la revendication 1 ou 3, comprenant en outre :

un moyen de détection d'état de fonctionnement (11) pour détecter un état de fonctionnement du moteur (3) ;

un moyen d'après-injection (6) pour effectuer une après-injection de carburant après cessation de l'injection principale de carburant pour obtenir une puissance de sortie du moteur (3) ; et

un moyen de post-injection (6) pour effectuer une post-injection de carburant pendant une course de détente ou une course d'échappement du moteur ultérieure à l'après-injection, et

dans lequel ledit moyen de commande d'élimination de SOF réalise la post-injection indépendamment de l'état de fonctionnement détecté du moteur, et réalise l'après-injection lorsque l'état de fonctionnement du moteur (3) est un état de fonctionnement à faible charge, mais inhibe l'après-injection lorsque l'état de fonctionnement du moteur (3) est un état de fonctionnement au ralenti ou un état de fonctionnement de charge moyenne à haute.

F I G. 1

EP 2 322 776 B1

F I G. 2

```
                    ┌──────────────────┐
                    │       MAIN       │
                    └──────────────────┘
                             │
                             ▼            ⌐S1
              ┌───────────────────────────────┐
              │    CALCULATION OF  Σ LSUM      │
              └───────────────────────────────┘
                             │
                             ▼         ⌐S2
                    ╱───────────────╲       YES
                   ⟨  Σ LSUM ≧ LREF ? ⟩──────────────────────┐
                    ╲───────────────╱                        │
                             │ NO                            │
                             ▼              ⌐S3              │
              ┌───────────────────────────────┐             │
              │    CALCULATE QFMAIN           │             │
              │    ACCORDING TO NE AND PMCMD  │             │
              └───────────────────────────────┘             │
                             │                               │
                             ▼              ⌐S4              │
              ┌───────────────────────────────┐             │
              │    CALCULATE EXSOOT           │             │
              │    ACCORDING TO NE AND QFMAIN │             │
              └───────────────────────────────┘             │
                             │                               │
                             ▼            ⌐S5                │
              ┌───────────────────────────────┐             │
              │    MSOOT ← MSOOT + EXSOOT     │             │
              └───────────────────────────────┘             │
                             │                               │
                             ▼            ⌐S6                │
              ┌───────────────────────────────┐             │
              │    CALCULATION  OF  MSOF      │             │
              └───────────────────────────────┘             │
                             │                               │
                             ▼            ⌐S7                │
              ┌───────────────────────────────┐             │
              │    MPM ← MSOOT + MSOF         │             │
              └───────────────────────────────┘             │
                             │                               │
                             ▼            ⌐S8                │
              ┌───────────────────────────────┐             │
              │    CALCULATE MPMMGN           │             │
              │    ACCORDING TO Σ LSUM        │             │
              └───────────────────────────────┘             │
                             │                               │
                             ▼            ⌐S9                │
              ┌───────────────────────────────┐             │
              │  MPMREF ← MPMBASE - MPMMGN    │             │
              └───────────────────────────────┘             │
                             │                               │
            NO               ▼            ⌐S10               │
         ┌───────────╱───────────────╲                      │
         │          ⟨   MPM ≧ MPMREF ? ⟩                     │
         │           ╲───────────────╱                      │
         │                   │ YES                           │
         │                   ▼         ⌐S11                  │
         │          ╱───────────────╲       NO              │
         │         ⟨  MSOF ≧ MSOFREF ? ⟩──────────┐         │
         │          ╲───────────────╱             │         │
         │                   │ YES                │         │
         │                   ▼       ⌐S12         ▼  ⌐S13   │
         │      ┌──────────────────┐    ┌──────────────────┐│
         │      │ SOF ELIMINATION  │    │ SOOT ELIMINATION ││
         │      │ CONTROL          │    │ CONTROL          ││
         │      └──────────────────┘    └──────────────────┘│
         │                   │                   │          │
         └───────────────────┼───────────────────┘          │
                             ▼◄───────────────────────────────┘
                             │            ⌐S14
              ┌───────────────────────────────┐
              │    Σ LSUM ← 0                 │
              └───────────────────────────────┘
                             │
                             ▼
                    ┌──────────────────┐
                    │      EXIT        │
                    └──────────────────┘
```

F I G. 3

$$\Sigma\, LSUM\ CALCULATION$$

S21

$$LSUM \leftarrow VP \cdot \Delta T^2$$

S22

$$TAT \leqq TATREF\ ?$$  — YES

NO

S23

$$TW \leqq TWREF\ ?$$  — NO

YES

S24

$$\Sigma\, LSUM \leftarrow \Sigma\, LSUM + LSUM$$

EXIT

F I G.  4

```
        ┌─────────────────────┐
        │  MSOF  CALCULATION  │
        └──────────┬──────────┘
                   │          ╭─S31
                   ▼          
           ╱────────────────╲   YES
          ╱  TAT ≦ TATREF ? ╲──────────────────┐
          ╲                 ╱                   │
           ╲───────┬───────╱                    │
                   │NO       ╭─S32              │
                   ▼                            │
           ╱────────────────╲   YES             │
          ╱  TW ≦ TWREF  ?  ╲─────────────┐    │
          ╲                 ╱             │    │
           ╲───────┬───────╱              │    │
                   │NO   ╭─S34            │    │
                   ▼                       ▼    ▼
        ┌──────────────────┐     ┌────────────────────────┐ ╭─S33
        │    EXSOF ← 0     │     │  CALCULATE EXSOF       │
        └─────────┬────────┘     │  ACCORDING TO NE AND QFMAIN│
                  │               └───────────┬────────────┘
                  │◄───────────────────────────┘
                  │          ╭─S35
                  ▼
        ┌──────────────────┐
        │ CALCULATE MSOFREM│
        │ ACCORDING TO TDPF│
        └─────────┬────────┘
                  │          ╭─S36
                  ▼
        ┌──────────────────────────────┐
        │ MSOF ← MSOF + EXSOF − MSOFREM │
        └─────────┬────────────────────┘
                  │
                  ▼
        ┌──────────────────┐
        │      EXIT        │
        └──────────────────┘
```

F I G. 5

```
      ╭─────────────────────────────╮
      │  AFTER-INJECTION EXECUTION  │
      │        DETERMINATION        │
      ╰─────────────────────────────╯
                    │
                    ▼          ╭S41
      ┌─────────────────────────────┐
      │  DETERMINE OPERATING STATE  │
      └─────────────────────────────┘
                    │
                    ▼                      ╭S42
   ╱──────────────────────────────────────╲     NO
  ╱  MEDIUM TO HIGH-LOAD OPERATING STATE   ╲───────────┐
  ╲      OR  IDLE OPERATING STATE  ?       ╱           │
   ╲──────────────────────────────────────╱           │
                    │ YES      ╭S43                    │ ╭S44
                    ▼                                  ▼
      ┌───────────────────────┐          ┌───────────────────────┐
      │      F_AFT ← 0        │          │      F_AFT ← 1        │
      └───────────────────────┘          └───────────────────────┘
                    │                                  │
                    │◄─────────────────────────────────┘
                    │          ╭S45
                    ▼
      ┌───────────────────────┐
      │      F_POST ← 1       │
      └───────────────────────┘
                    │
                    ▼
      ╭───────────────────────╮
      │         EXIT          │
      ╰───────────────────────╯
```

F I G. 6

F I G. 7

# F I G. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005002830 A
- JP 4291627 B
- JP 2006291788 A